# EUROPÄISCHE PATENTSCHRIFT

(11) **EP 1 844 372 B1**
(45) Veröffentlichungstag und Bekanntmachung des Hinweises auf die Patenterteilung: **21.10.2015**
(21) Anmeldenummer: 06707912.9
(22) Anmeldetag: 31.01.2006
(51) Int. Cl.: G05B 19/418

(54) **VERFAHREN UND SYSTEM ZUR BESTANDSERFASSUNG UND/ODER -]BERWACHUNG VON GEGENST[NDEN UND/ODER G]TERN**
METHOD AND SYSTEM FOR RECORDING AND/OR MONITORING THE INVENTORY OF OBJECTS AND/OR GOODS
PROCEDE ET SYSTEME POUR DETERMINER ET/OU CONTROLER DES STOCKS D'OBJETS ET/OU DE MARCHANDISES

(30) Priorität: 31.01.2005 DE 102005004469
(43) Veröffentlichungstag der Anmeldung: 17.10.2007
(73) Patentinhaber: Atos IT Solutions and Services GmbH, 81739 München (DE)
(72) Erfinder: GILDNER, Markus, 91074 Herzogenaurach (DE); HUBER, Harald, 91054 Erlangen (DE)
(74) Vertreter: Patentanwaltskanzlei WILHELM & BECK
(86) Internationale Anmeldenummer: PCT/EP2006/050538
(87) Internationale Veröffentlichungsnummer: WO 2006/079663

(56) Entgegenhaltungen:
- US-B1- 6 360 208

## Beschreibung

Verfahren und informationstechnische Systeme zur sicheren Abwicklung und Verwaltung komplexer Logistikprozesse aus dem Bereich des Waren-, Personen-, Zahlungsmittel-, Objekt- und Informationsverkehrs werden zunehmend durch den Einsatz von automatischen Identifikationstechnologien (AutoID-Technologien) unterstützt. Seit einigen Jahren haben sich AutoID-Technologien in der industriellen Anwendung, dem Waren-, Straßen- und dem Zahlungsverkehr sowie dem Gesundheitswesen und auch in der öffentlichen Verwaltung stark verbreitet.

Um das Potential, welches der Einsatz von AutoID-Technologie bietet, wirksam zu erschließen, ist es sinnvoll, eine Integration und Abbildung in unternehmensinternen Verfahren kommerzieller Datenverarbeitung (Backend-Systeme) sicherzustellen. Daneben sind eine Abbildung und Steuerung unternehmensübergreifender Prozesse durch Austausch und Überwachung von Daten bis hin zur Steuerung und Überwachung von Fremdprozessen zwischen beteiligten Partnern unter Einhaltung hoher Sicherheitsstandards zu gewährleisten.

Problematisch erweist sich, daß Anwender und am Gesamtprozeß beteiligte Partner, beispielsweise Zulieferer, Transporteure oder Händler, in den wenigsten Fällen in der Lage sind, unter Einsatz von AutoID-Technologien erzeugte Daten zeitnah zu erfassen, zu verarbeiten und in ihrem Backend-System mit unternehmensinternen Daten und Prozessen zu verbinden. Des weiteren ist es mit existierenden Backend-Systemen meist nicht möglich komplexe Prozesse abzubilden. Hierzu zählen insbesondere Prozesse, die über Unternehmensgrenzen hinausgehen, um Folgeprozesse bei beteiligten Partnern zu initiieren und zu steuern.

Insbesondere bei AutoID-Technologien, die keinen sichtbaren Kontakt von Sende- und Empfangseinrichtungen benötigen und je nach Frequenzband und Sendeleistung Verbindungen über mehrere Meter Entfernung ermöglichen, sind vom Anwender mitunter schwer kontrollierbar. Hierdurch werden unberechtigten Dritten Möglichkeiten zum Zugriff auf vertrauliche Daten und zu deren Manipulation eröffnet wird.

Aus US 6,360,208 B1 ist ein Verfahren zur Bestandserfassung von Gütern bekannt, bei dem ein Gut mit einem erfassbaren Identifikator versehen ist, durch den das Gut identifizierbar ist, wobei der Identifikator bei einem Eingang des Guts an einem zumindest zeitweiligen Ort mittels einer Erfassungseinrichtung erfasst wird, wobei eine den erfassten Identifikator umfassende Anforderung zur Abfrage einer dem Gut zugeordneten Zustandsinformation von der Erfassungseinrichtung an eine vertrauenswürdige Instanz übermittelt wird, wobei ein Zugriff auf die Zustandsinformation bei Vorliegen einer der Erfassungseinrichtung zugeordneten Berechtigung durch eine vertrauenswürdige Instanz eingeräumt wird.

Der vorliegenden Erfindung liegt daher die Aufgabe zugrunde, ein Verfahren und System zur Bestandserfassung bzw. -überwachung von Gegenständen bzw. Gütern zu schaffen, das einerseits eine Minimierung von unberechtigten Datenzugriffen und Manipulationsmöglichkeiten bewirkt und andererseits eine Einbeziehung an Logistikprozessen beteiligter Partner vereinfacht.

Erfindungsgemäß wird diese Aufgabe durch ein Verfahren mit den in Anspruch 1 angegebenen Merkmalen und ein System mit den in Anspruch 6 angegebenen Merkmalen gelöst. Vorteilhafte Weiterbildungen des erfindungsgemäßen Verfahrens sind in den abhängigen Ansprüchen angegeben.

Ein wesentlicher Aspekt der vorliegenden Erfindung basiert darauf, daß ein Gegenstand bzw. Gut mit einem erfaßbareren Identifikator versehen ist, durch den der Gegenstand bzw. das Gut identifizierbar ist. Der Identifikator wird bei einem Eingang des Gegenstands bzw. Gutes an einem zumindest zeitweiligen Aufbewahrungsort mittels einer Erfassungseinrichtung erfaßt. Eine den erfaßten Identifikator umfassende Anforderung zur Abfrage bzw. Bearbeitung einer dem Gegenstand bzw. Gut zugeordneten Zustandsinformation wird von der Erfassungseinrichtung an eine vertrauenswürdige Instanz übermittelt. Ein Zugriff auf die Zustandsinformation wird bei Vorliegen einer der Erfassungseinrichtung zugeordneten Berechtigung durch die vertrauenswürdige Instanz zumindest zeitweilig eingeräumt, wobei ein Agentensystem am Standort der Erfassungseinrichtung verwendet wird.

Entsprechend einer vorteilhaften Weiterbildung der vorliegenden Erfindung ist der Gegenstand bzw. das Gut mit einem Transponder versehen, der auf eine mittels einer Sende-/- Empfangseinheit der Erfassungseinrichtung übermittelten Anforderung den Identifikator an die Erfassungseinrichtrichtung übermittelt. Beispielsweise wird als Transponder ein RFID-Chip verwendet, auf dem auch die Zustandsinformation verschlüsselt abgespeichert ist.

Vorzugsweise wird der Zugriff auf die Zustandsinformation durch Bereitstellung eines der Erfassungseinrichtung zugeordneten Schlüssels zum Entschlüsseln der verschlüsselt abgespeicherten Zustandsinformation eingeräumt. Die Zustandsinformation kann beispielsweise bei einem Ausgang des Gegenstandes bzw. Gutes vom Aufbewahrungsort an einen Bestimmungsort mit einem einer Erfassungseinrichtung am Bestimmungsort zugeordneten Schlüssel automatisch verschlüsselt werden.

Die vorliegende Erfindung wird nachfolgend an einem Ausführungsbeispiel anhand der Zeichnung näher erläutert. Es zeigt
- Fig. 1: eine schematische Darstellung einer Wertschöpfungskette zur Erläuterung eines Anwendungsumfeldes der vorliegenden Erfindung,
- Fig. 2: eine schematische Darstellung eines Datenverarbeitungssystems zur Implementierung eines Verfahrens zur Bestandserfassung und -überwachung,
- Fig. 3: eine schematische Darstellung zur Erläuterung der Interaktion zwischen einem Transponder an einem zu überwachenden Gut und einer Sende-/Empfangseinheit einer Erfassungseinrichtung.

Die vorliegende Erfindung ist nicht zwingend mit einem Produktionsprozeß von Waren verbunden, sondern findet Anwendung in zahlreichen Bereichen des öffentlichen Lebens und der Wirtschaft, in welchen durch die Zusammenarbeit von Individuen wertschöpfende Ketten oder Netzwerke entstehen und in bestimmten Prozessen Ströme und Zustände von Objekten (Waren, Zahlungsmittel, Personen, Lebewesen) durch einen Informations- bzw. Datenstrom begleitet werden.

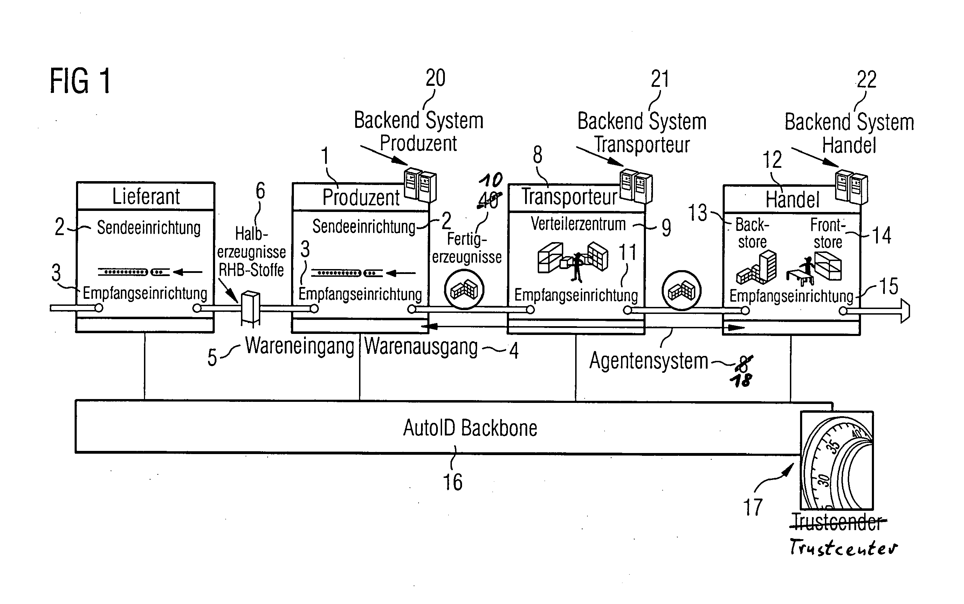

Die Beschreibung der Erfindung erfolgt aus Anschaulichkeitsgründen zunächst am Beispiel eines Wertschöpfungsnetzwerks von Wirtschaftsgütern, bestehend aus den Partnern Lieferant, Produzent, Transporteur und Handel. In Bezug auf Figur 1, welche eine typische Wertschöpfungskette darstellt, welche von einem Produzenten von Wirtschaftsgütern 1, welcher Halberzeugnisse, Roh-, Hufs- und Betriebsstoffe von Lieferanten zu Fertigerzeugnissen verarbeitet, über den Transporteur 8 in den Handel 12 und letztendlich zum Endverbraucher führt. Der Objekt-, bzw. Warenstrom wird jeweils von einem Informations- und Datenstrom begleitet - jedem Objekt und jeden Produktions- und Leistungsschritt ist ein bestimmter Datensatz zugeordnet.

Wird beim Produzenten 1 eine Lieferung von Halberzeugnissen 6, welche mit einem kontaktlosen Transponder 2 versehen sind im Wareneingang 5 vereinnahmt, erfolgt durch die Empfangseinrichtung 3 im Wareneingang die Aktivierung des Transponders 2. Die Empfangseinrichtung 3 erhält vom Transponder eine Identifikationsnummer mit der die Empfangseinrichtung 3 über den AutoID-Backbone 16 eine Anfrage an das Trust Center 17 stellt.

Im Trust Center hat vorher der Lieferant der Halberzeugnisse 6 automatisch einen Authentifizierungsschlüssel hinterlegt und definiert von welchen Handelsteilnehmern der Wertschöpfungskette auf diesen zugegriffen werden darf. Die Empfangseinrichtung 3 des Produzenten 1 ist folglich als autorisier ter Empfänger für den Authentifizierungsschlüssel dem Trust Center 17 bekannt und erhält den Zugriff auf den Schlüssel. Der Schlüssel wird auf einem, im Standort des Produzenten 1 installierten Agentensystem 18 abgelegt, welches lediglich eine abgesetzte funktionale Komponente des AutoID-Backbone 16 darstellt und steht für den Datenaustauschvorgang zwischen Empfangseinrichtung 3 und Transponder 2 zur Verfügung. Die Gültigkeit des Schlüssels erstreckt sich nur auf diese spezifische Liefereinheit dieses bestimmten Lieferanten.

Vorteil dieses vorgelagerten Authentifizierungsprozesses ist, daß Daten des Transponders 2 nur von dafür berechtigten Handelsteilnehmern gelesen und verändert werden können. Damit wird sichergestellt, daß spezifische Objektinformationen geheim bleiben und diese Informationen auch nicht in erpresserischer Absicht willkürlich verändert werden können, sowie auch nicht nachgeahmt werden können, um z.B. Produktpiraterie zu betreiben.

Nachdem die Empfangseinrichtung 3 sich auf dem Transponder 2 erfolgreich authentifizieren konnte, sendet dieser die gespeicherten Informationen an die Empfangseinrichtung 3. Dieser beschriebene Lesevorgang erfolgt sequentiell. Innerhalb kurzer Zeitabstände - hier: Sekunden - werden mehrere Einzelobjekte erfaßt. Um Mehrfachlesevorgänge zu verhindern wird der ausgelesene Transponder 2 durch ein Signal der Empfangseinrichtung 3 temporär deaktiviert. Des weiteren werden Lesefehler und sonstige Störsignale vom lokalen Agentensystem 18 bereinigt und die empfangenen Daten einer Plausibilitätsprüfung unterzogen.

Da der Lieferant der Halberzeugnisse seine Lieferung bereits mit einer elektronischen Lieferavise über den AutoID-Backbone 16 angekündigt hat und weitere produktspezifischen Daten diesem Lieferavis beigefügt sind, erfolgt zunächst die Überprüfung, ob die gelieferten Halberzeugnisse mit den avisierten Informationen in Stückzahl und eindeutiger Nummer sowie Zeitpunkt der Lieferung übereinstimmen.

Stimmen alle avisierten Angaben mit den aus dem Transponder 2 ausgelesenen Angaben überein, erfolgt durch das lokale Agentensystem 18 die Aufbereitung und Konsolidierung dieser Daten und die Weiterleitung an das Backend-System 20, durch Anstoß einer Debitoren-, bzw. Kreditorenbuchung, sowie ggf. Auslösung weiterer Prozesse im Backend-System 20. Es erfolgt über den AutoID-Backbone 16 automatisiert eine Rückmeldung an das Backend-System des Lieferanten.

Beim Durchlaufen des Produktionsprozesses können weitere Lese-/Schreibvorgänge auf dem Transponder 2 erfolgen, bzw. können weitere Transponder 2 mit dem Fertigerzeugnis 10 verbunden werden, um dieses für die weiteren Prozeßschritte entlang der Wertschöpfungskette zu identifizieren. Alle Änderungen der Daten auf dem Transponder werden über den vorstehend beschriebenen Prozeß durch das Trust Center 17 abgesichert. Nach Abschluß des Produktionsprozesses erfolgt die Einlagerung der Fertigerzeugnisse 10 im Lager des Produzenten 1, bzw. die Auslieferung an den Handel 12. Der Handel 12 verfügt in diesem Fall über einen "Vendor Managed lnventory" Vertrag mit dem Produzenten 1. Dies bedeutet, daß der Produzent 1 dafür zu sorgen hat, daß die Verfügbarkeit seiner Produkte im Back-Store Bereich 13 und letztendlich im Front-Store Bereich des Handels 12 immer bedarfsgerecht gestaltet ist. Somit hat der Produzent die Notwendigkeit einen virtuellen Bestand seiner Mengen im Lagerbereich 13, 14 des Handels zu führen und Schwellwerte definieren, bei deren Unterschreiten Folgeprozesse in der gesamten Wertschöpfungskette angestoßen werden, wie in etwa Replenishment der Produktion, Bestellabrufe von Halberzeugnissen 6, bei nicht ausreichenden Lagerbeständen. Diese komplexen logistischen Überwachungs- und Folgeprozesse werden regelbasiert durch den AutoID-Backbone 16 abgebildet. Die logistische Abwicklung der Belieferung des Handels erfolgt durch den Transporteur 8, welcher in Folge des Absinkens des Bestands von Produkten im Lagerbereich 13, 14 des Handels 12 und in Folge dessen, nach Prüfung des Lagerbestands im Fertigerzeugnis-Lager des Produzenten 1, einen automatischen Transportauftrag via AutoID-Backbone 16 erhält, einschließlich einer elektronischen Stückliste und definierter Liefer- und Abholzeiten.

Beim Verlassen des Warenausgangs 4 erfolgt eine automatische Generierung eines Authentifizierungsschlüssels durch das Trust-Center 17 für diese Lieferung und Berechtigung des Transporteurs 8, sowie des Handels 12 zum Lesen der Informationen auf den den Warenobjekten zugeordneten Transpondern 2. Der Authentifizierungsschlüssel wird auf dem AutoID-Backbone 16 hinterlegt und kann von den berechtigten Partnern abgerufen werden. Es erfolgt zudem die Verschlüsselung der Daten auf dem Transponder 2 sowie die Generierung und Hinterlegung der eindeutigen Produktnummer und zusätzlichen Daten auf dem Transponder 2, Referenzierung dieser mit den betreffenden Objektdaten im Backend-System 20 des Produzenten 1, sowie Erzeugung eines Lieferavis an den Handel 12. Der Lieferavis wird auf dem AutoID-Backbone 16 mit bestimmten Regeln hinterlegt und wartet auf die Vereinnahmung im Verteilzentrum 9 des Transporteurs 8, sowie die Vereinnahmung im Back-Store 13 Lager des Handels 12.

Sobald der Artikel im Front-Store-Bereich 14 des Handels von einem Endverbraucher käuflich erworben wird, erfolgt die Rückmeldung durch das Backend-System 22 des Handels 12 an den AutoID-Backbone 16, welcher dann automatisch den virtuellen Bestand des Produzenten 1 im Lagerbereich des Handels 13, 14 minimiert. Durch die Abbildung sämtlicher Prozeßschritte auf dem AutoID-Backbone 16 ergibt sich eine uneingeschränkte Rückverfolgbarkeit, insbesondere an den Gefahrenübergängen, zwischen den beteiligten Partnern der Wertschöpfungskette.

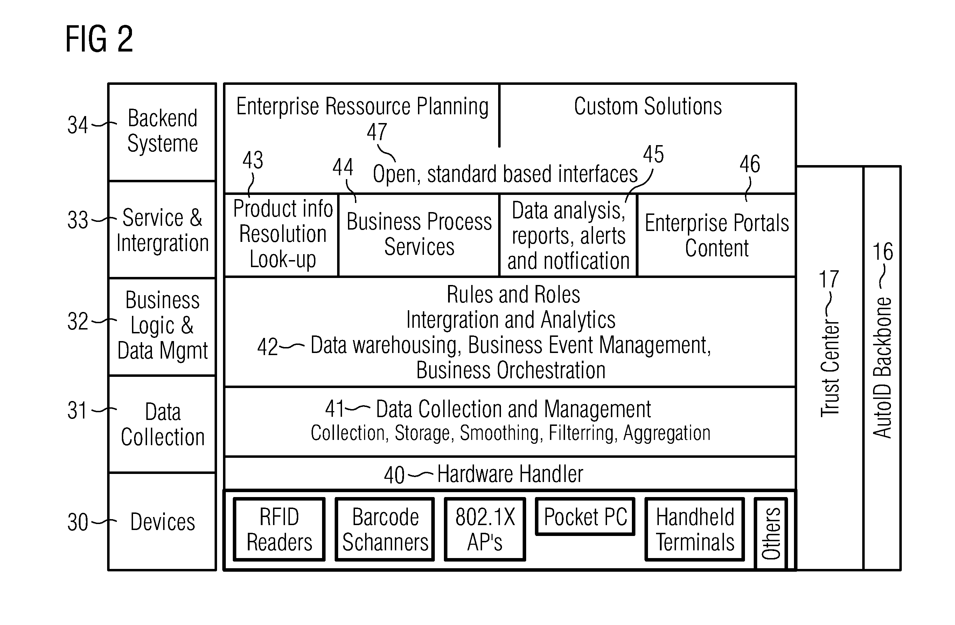

Die schematische Darstellung in Figur 2 wurde in bestimmte Schichten aufgeteilt, welche alle funktionalen Bestandteile, aber auch angrenzende funktionale Einheiten darstellt, die vom AutoID-Backbone 16 beeinflußt, gesteuert oder überwacht werden. In der Device-Ebene 30 werden alle Endgeräte dargestellt, welche Daten von Transpondern 2 lesen, oder auf diese schreiben können. Die Device-Ebene umfaßt auch Geräte, welche als Datensichtstation Informationen, oder Anweisungen an Bedienpersonal zu manueller Interaktion darstellen.

Der AutolD-Backbone 16 ist in der Lage mit der Komponente Hardware Hand/er 40 alle Komponenten aus der Device-Ebene 30 zu überwachen, zu steuern und die Roh-Signale in maschinenlesbare Datenformate zu transformieren bzw. auch Daten aus den Ebenen 34, 33, 32, und 31 in für Anzeigegeräte lesbare Formate umzuwandeln. Der Hardware-Handler 40 übergibt die aufbereiteten Daten an die Data-Collection- und -Management-Komponente 41, welche die weitere Aufbereitung, die Filterung von Duplikaten, nicht zulässigen Transpondern 2, oder Fehlern vornimmt. Über die Data-Collection-Ebene werden auch die Anfragen an das Trust-Center 17 gesteuert, um notwendiges Schlüsselmaterial zur Authentifizierung auf den Transpondern abzurufen und anzuwenden.

Nach Vorverarbeitung im Data-Collection-Modul 41 erfolgt die Prüfung, ob für die gelesenen Datensätze bestimmte Regeln oder vordefinierte Folgeprozesse zur Weiterverarbeitung vorliegen. Für den Fall, daß bestimmte Folgeprozesse vordefiniert sind und auf die eindeutige Produktnummer der eingelesenen Transponder 2 referenzieren, erfolgt die Anwendung dieser definierten Regel und somit Auslösung von Folgeprozessen innerhalb des Unternehmens, aber auch Auslösen und Überwachen von notwendigen Folgeprozessen bei Partnern außerhalb des Unternehmens. Das Data-Collection-Modul steuert auch Lese- und Schreibvorgänge über das Interface-Modul 47 in die jeweiligen Backend-Systeme 34.

Die Service&Integration-Schicht 33 beinhaltet Schnittstellen zu allen gängigen Backend-Systemen 34, auf Basis von offenen Standards, wie SOAP, LDAP, EDI. Des weiteren werden in dieser Schicht zusätzliche Leistungsmerkmale vorgehalten, wie z.B. die Schnittstelle zu ONS (Object Naming Service) 43, der es ermöglicht Produktinformationen zu Objekten zu lokalisieren. Des weiteren finden sich in dieser Schicht Business-Process-Services 44, die es ermöglichen, komplexe methodische bzw. logistische Prozesse abzubilden, welche über die Funktionalität der existierenden Backend-Systeme 34 hinausgehen. Komplexe mathematische Modelle mit integrierten Funktionalitäten von neuronalen Netzen und Verfahren nicht-linearer Dynamik ermöglichen eine bestimmte Lernfähigkeit und vorausschauende Planungsfunktionalität des AutoID-Backbone 16. Die Generierung von Reports und Analysen wird mit Standardwerkzeugen im Modul Data-Analysis 35 vorgehalten. Eine weitere Aufbereitungsmöglichkeit der in Modul 35 und 34 ermittelten und produzierten Daten sieht das Modul Enterprise-Portals-Content 36 für alle gängigen Unternehmensportale vor.

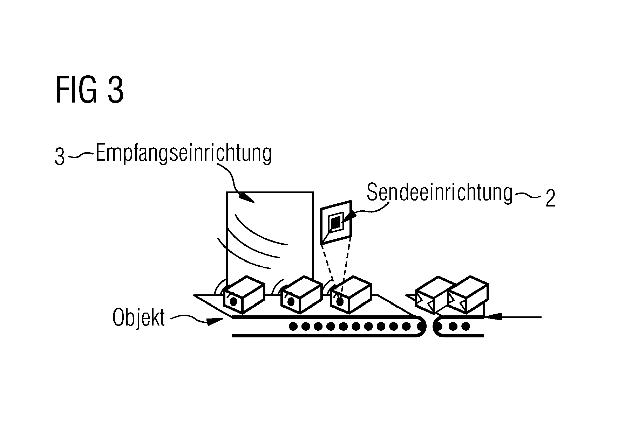

Die schematische Darstellung in Figur 3 der für das Verfahren verwendeten Transponder 2 zeigt, daß der Transponder 2 von einer entsprechenden Empfangeinrichtung 3 durch Induzierung einer Spannung angesprochen wird, also sich im Sende- und Empfangsbereich dieser befindet Der Transponder überträgt nach erfolgreicher Authentifizierung der Empfangseinrichtung auf diesem den eindeutigen Produktcode. Außerdem können zusätzliche Daten des Transponders an die Empfangseinheit übertragen werden.

Die vorgenannte Authentifizierung hat den weiteren Vorteil, daß auf dem Transponder auch Preisinformationen hinterlegt werden können, ohne daß diese nachträglich unautorisiert verändert werden können. Bei Konsumartikeln kann das spezifische Gewicht auf den Transponder geschrieben werden, um etwaige Labelveränderungen ermitteln zu können. Des weiteren können auf dem Transponder statistische Warennummern und statistische Warenwerte hinterlegt werden, welche für die Verzollung im internationalen Warenverkehr von größter Bedeutung sind und somit eine nachträgliche Veränderung und damit Abgabenverkürzung wirkungsvoll unterbunden werden kann. Alle Daten können wahlweise gegen Lesen und/oder Schreiben geschützt werden.

Der Transponder sieht eine Deaktivierungsmöglichkeit vor. Dies bedeutet, daß der Transponder beim Senden eines bestimmten Signals, etwa beim Warenausgang im Handel 12, temporär oder permanent deaktiviert wird.

Die Anwendung der vorliegenden Erfindung ist nicht auf die hier beschriebenen Ausführungsbeispiele beschränkt.

## Patentansprüche

1. Verfahren zur Bestandserfassung und/oder -Überwachung von Gegenständen und/oder Gütern (6, 10), bei dem
- ein Gegenstand und/oder Gut (6, 10) mit einem erfaßbaren Identifikator versehen ist, durch den der Gegenstand und/oder das Gut (6, 10) identifizierbar ist,
- der Identifikator bei einem Eingang des Gegenstands und/oder Gutes (6, 10) an einem zumindest zeitweiligen Aufbewahrungsort mittels einer Erfassungseinrichtung (3) erfaßt wird,
- eine den erfaßten Identifikator umfassende Anforderung zur Abfrage und/oder Bearbeitung einer dem Gegenstand und/oder Gut (6, 10) zugeordneten Zustandsinformation von der Erfassungseinrichtung an eine vertrauenswürdige Instanz (17) übermittelt wird, **dadurch gekennzeichnet, dass** ein Zugriff auf die Zustandsinformation bei Vorliegen einer der Erfassungseinrichtung (3) zugeordneten Berechtigung durch die vertrauenswürdige Instanz (17) zumindest zeitweilig eingeräumt wird, wobei
ein Agentensystem (18) am Standort der Erfassungseinrichtung (3) verwendet wird.

2. Verfahren nach Anspruch 1, bei dem
der Gegenstand und/oder das Gut (6, 10) mit einem Transponder (2) versehen ist, der auf eine mittels einer Sende-/Empfangseinheit der Erfassungseinrichtung (3) übermittelten Anforderung den Identifikator an die Erfassungseinrichtrichtung (3) übermittelt.

3. Verfahren nach Anspruch 2, bei dem
als Transponder (2) ein RFID-Chip verwendet wird, auf dem die Zustandsinformation verschlüsselt abgespeichert ist.

4. Verfahren nach Anspruch 3, bei dem
der Zugriff auf die Zustandsinformation durch Bereitstellung eines der Erfassungseinrichtung (3) zugeordneten Schlüssels zum Entschlüsseln der verschlüsselt abgespeicherten Zustandsinformation eingeräumt wird.

5. Verfahren nach einem der Ansprüche 1 bis 4, bei dem die Zustandsinformation bei einem Ausgang des Gegenstandes und/oder Gutes (6, 10) vom Aufbewahrungsort an einen Bestimmungsort mit einem einer Erfassungseinrichtung (3) am Bestimmungsort zugeordneten Schlüssel automatisch verschlüsselt wird.

6. System zur Bestandserfassung und/oder -Überwachung von Gegenständen und/oder Gütern (6, 10) mit
- einem Gegenstand und/oder Gut (6, 10), der und/oder das mit einem erfaßbareren Identifikator versehen ist, durch den der Gegenstand und/oder das Gut (6, 10) identifizierbar ist,
- einer Erfassungseinrichtung (3) zur Erfassung des Identifikators bei einem Eingang des Gegenstands und/oder Gutes (6, 10) an einem zumindest zeitweiligen Aufbewahrungsort,
- zumindest einem Mittel (16) zur Übermittlung einer den erfaßten Identifikator umfassenden Anforderung zur Abfrage und/oder Bearbeitung einer dem Gegenstand und/oder Gut (6, 10) zugeordneten Zustandsinformation von der Erfassungseinrichtung (3) an eine vertrauenswürdige Instanz (17), **dadurch gekennzeichnet, dass**
zumindest ein der vertrauenswürdigen Instanz (17) zugeordnetes Mittel (16) über ein Agentensystem (18) am Standort der Erfassungseinrichtung (3) eine zumindest zeitweilige Einräumung eines Zugriffs auf die Zustandsinformation bei Vorliegen einer der Erfassungseinrichtung (3) zugeordneten Berechtigung bewirkt.

## Claims

1. Method for inventory logging and/or monitoring of items and/or goods (6, 10), in which
- an item and/or good (6, 10) is provided with a loggable identifier that can identify the item and/or the good (6, 10),
- the identifier is logged by means of a logging device (3) when the item and/or good (6, 10) arrives at an at least temporary holding area,
- a request, comprising the logged identifier, for retrieving and/or handling a piece of state information associated with the item and/or good (6, 10) is transmitted from the logging device to a trustworthy entity (17), **characterized in that** access to the piece of state information is granted at least temporarily by the trustworthy entity (17) when authorization associated with the logging device (3) exists, wherein
an agent system (18) is used at the location of the logging device (3).

2. Method according to Claim 1, in which the item and/or the good (6, 10) is provided with a transponder (2) that transmits the identifier to the logging device (3) upon a request transmitted by means of a transmission/reception unit of the logging device (3).

3. Method according to Claim 2, in which the transponder (2) used is an RFID chip on which the piece of state information is stored in encrypted form.

4. Method according to Claim 3, in which the access to the piece of state information is granted by providing a key, associated with the logging device (3), for decrypting the piece of state information stored in encrypted form.

5. Method according to one of Claims 1 to 4, in which the piece of state information is automatically encrypted using a key associated with a logging device (3) at the destination when the item and/or good (6, 10) leaves the holding area for a destination.

6. System for inventory logging and/or monitoring of items and/or goods (6, 10), having
- an item and/or good (6, 10) that is and/or are provided with a loggable identifier that can identify the item and/or the good (6, 10),
- a logging device (3) for logging the identifier when the item and/or good (6, 10) arrives at an at least temporary holding area,
- at least one means (16) for transmitting a request, comprising the logged identifier, for retrieving and/or handling a piece of state information associated with the item and/or good (6, 10) from the logging device (3) to a trustworthy entity (17), **characterized in that**
at least one means (16), associated with the trustworthy entity (17), uses an agent system (18) at the location of the logging device (3) to prompt at least temporary granting of access to the piece of state information when authorization associated with the logging device (3) exists.

## Revendications

1. Procédé pour l'évaluation et/ou la surveillance de stocks d'objets et/ou de marchandises (6, 10), dans lequel
- un objet et/ou une marchandise (6, 10) est (sont) muni(e)(s) d'un identificateur détectable grâce auquel l'objet et/ou la marchandise (6, 10) est identifiable,
- l'identificateur est détecté lors d'une arrivée de l'objet et/ou de la marchandise (6, 10) sur un lieu de stockage, au moins temporaire, au moyen d'un dispositif de détection (3),
- une demande d'interrogation et/ou de traitement, comprenant l'identificateur détecté, d'une information d'état associée à l'objet et/ou à la marchandise (6, 10) est transmise par le dispositif de détection à une instance digne de confiance (17),
**caractérisé en ce qu'**un accès à l'information d'état est accordé au moins temporairement par l'instance digne de confiance (17) en présence d'une autorisation associée au dispositif de détection (3),
un système d'agent (18) étant utilisé sur le lieu d'implantation du dispositif de détection (3).

2. Procédé selon la revendication 1, dans lequel l'objet et/ou la marchandise (6, 10) est (sont) muni(e)(s) d'un transpondeur (2) lequel, suite à une demande transmise au dispositif de détection (3) au moyen d'une unité d'émission/réception, transmet l'identificateur au dispositif de détection (3).

3. Procédé selon la revendication 2, dans lequel on utilise en tant que transpondeur (2) une puce RFID sur laquelle l'information d'état est enregistrée de manière codée.

4. Procédé selon la revendication 3, dans lequel l'accès à l'information d'état est accordé par mise à disposition d'une clé associée au dispositif de détection (3) pour le décodage de l'information d'état enregistrée de manière codée.

5. Procédé selon l'une des revendications 1 à 4, dans lequel,
à la sortie de l'objet et/ou de la marchandise (6, 10) du lieu de stockage à un lieu de destination, l'information d'état est automatiquement codée avec une clé associée au dispositif de détection (3) sur le lieu de destination.

6. Système pour l'évaluation et/ou la surveillance de stocks d'objets et/ou de marchandises (6, 10) comprenant
- un objet et/ou une marchandise (6, 10) qui est (sont) muni(e)(s) d'un identificateur détectable grâce auquel l'objet et/ou la marchandise (6, 10) est (sont) identifiable(s),
- un dispositif de détection (3) pour la détection de l'identificateur lors d'une arrivée de l'objet et/ou de la marchandise (6, 10) sur un lieu de stockage au moins temporaire,
- au moins un moyen (16) pour la transmission d'une demande, comprenant l'identificateur détecté, pour l'interrogation et/ou le traitement d'une information d'état associée à l'objet et/ou à la marchandise (6, 10) de la part du dispositif de détection (3) à l'attention d'une instance digne de confiance (17),
**caractérisé en ce que**
au moins un moyen (16) associé à l'instance digne de confiance (17) provoque, via un système d'agent (18) sur le lieu d'implantation du dispositif de détection (3), l'attribution d'un accord au moins temporaire pour un accès à l'information d'état en présence d'une autorisation associée au dispositif de détection (3).
